# DEMANDE DE BREVET EUROPEEN

(11) **EP 2 365 680 A1**
(43) Date de publication de la demande: **14.09.2011**
(21) Numéro de dépôt: 11152432.8
(22) Date de dépôt: 27.01.2011
(51) Int. Cl.: H04L 29/08

(54) **Dispositif de gestion dynamique des pages de sites internet dont les fréquentations et audience doivent être analysées**

(30) Priorité: 08.03.2010 FR 1051651
(71) Demandeur: Alcatel Lucent, 75007 Paris (FR)
(72) Inventeur: Delegue, Gérard, 91620, NOZAY (FR); Poussierre, Fabrice, 91620, Nozay (FR)
(74) Mandataire: Chaffraix, Sylvain

(57) **Abrégé**

Un dispositif (D) est dédié à la gestion d'analyses de données d'audience et de fréquentation de site(s) Internet proposant des pages de données. Ce dispositif (D) comprend une première partie (P1) comportant i) des moyens de traitement (MT) agencés pour déterminer en temps réel quelles pages d'au moins un site Internet doivent être analysées et quelles pages d'au moins un site Internet ne doivent plus être analysées, en fonction au moins des trafics relatifs aux pages, et ii) des moyens de génération (MG) agencés pour générer des commandes désignant au moins une page déterminée et un état spécifiant si cette page doit ou ne doit pas être analysée et un éventuel mode d'analyse de cette page.

## Description

L'invention concerne les analyses qui sont destinées à mesurer l'audience et la fréquentation de pages de sites Internet (ou "web analytics" en anglais).

Comme le sait l'homme de l'art, plusieurs solutions ont été proposées pour analyser le trafic sur des sites Internet afin d'estimer l'audience et la fréquentation des pages qu'ils mettent à la disposition d'utilisateurs d'équipements de communication. Ces solutions permettent plus précisément d'obtenir des informations relatives au trafic, à l'utilisation des navigateurs (ou "browsers"), à l'utilisation d'applications, aux intérêts généraux des utilisateurs et/ou à la pertinence des contenus des pages Internet, notamment.

L'obtention des informations précitées se fait généralement selon l'une ou l'autre des deux méthodes décrites ci-dessous.

La première méthode consiste à associer à une page de site Internet dont on veut analyser les "performances", au niveau du serveur qui offre l'accès à ce site Internet, un ensemble de codes, dit "code de balisage de page" ou "page tagging" en anglais, par exemple en Javascript, qui signale à un serveur tiers que la page est consultée par un navigateur (ou "browser"). Lorsqu'un équipement de communication accède à une telle page, le code de balisage de page associé le contraint à transmettre à un serveur identifié des données de trafic qui sont généralement des indicateurs tels que des identifiants de site Internet, des identifiants de page de site Internet, et des données de client. Ces indicateurs reçus sont ensuite analysés de manière à déduire les performances des pages correspondantes. Cette première méthode est par exemple mise en oeuvre par des outils informatiques tels que Google analytics®, Xiti®, Webtrends®, Clicky web analytics®, Core metrics® ou Omniture®.

La seconde méthode consiste à analyser des données de trafic (ou information d'accès, ou encore "logs" en anglais) auprès d'un serveur qui offre un accès à des pages d'un site Internet afin de déterminer les performances de ces pages. Cette seconde méthode est par exemple mise en oeuvre par des outils informatiques tels que AWStats®, WebAlizer®, ClickTracks®, Analog® ou SawMill Analytics®.

Les méthodes présentées ci-avant, et en particulier la première, génèrent une quantité de données de trafic dont le volume croît avec le succès d'une page analysée et donc monopolise une quantité importante de bande passante des réseaux de communication et requiert d'importantes capacités de calcul (ou CPU) lors des analyses.

Il est certes possible de contrôler statiquement la fréquence des analyses afin de limiter la quantité de données de trafic à transmettre et la capacité de calcul à utiliser. Mais, dans ce cas les analyses peuvent s'avérer biaisées. En effet, lorsque l'on réduit la fréquence des analyses, une baisse (ou une augmentation) importante du trafic relatif à une page peut survenir entre deux analyses programmées, sans que l'on puisse s'en apercevoir ou bien sans que l'on puisse en comprendre la cause.

Aucune solution connue n'apportant une entière satisfaction, l'invention a donc pour but d'améliorer la situation.

Elle propose à cet effet un dispositif, dédié à la gestion d'analyses de données d'audience et de fréquentation de site(s) Internet proposant des pages de données, et comprenant une première partie comportant:
- des moyens de traitement agencés (ou conçus) pour déterminer en temps réel quelle(s) page(s) d'au moins un site Internet doi(ven)t être analysée(s) et quelle(s) page(s) d'au moins un site Internet ne doi(ven)t plus être analysée(s), en fonction au moins des trafics relatifs aux pages, et
- des moyens de génération agencés pour générer des commandes désignant au moins une page déterminée et un état spécifiant si cette page doit ou ne doit pas être analysée et un éventuel mode d'analyse de cette page.

Le dispositif selon l'invention peut comporter d'autres caractéristiques qui peuvent être prises séparément ou en combinaison, et notamment :
- sa première partie peut comprendre des moyens d'analyse agencés pour déterminer les trafics en cours sur des pages à partir de données de trafic;
   ➢ sa première partie peut comprendre des premiers moyens de stockage agencés pour stocker les données de trafic;
   ➢ les données de trafic peuvent être des indicateurs qui sont choisis parmi (au moins) des identifiants de site Internet, des identifiants de page de site Internet, un nombre de clicks sur un lien, une adresse URL d'une page qui a initialement généré une demande pour accéder à une page en cours, et des données de client ayant accédé à une page Internet;
      - les données de client peuvent être choisies parmi (au moins) des adresses IP d'équipement de communication de client, des identifiants de navigateur de client et des identifiants d'application de client ayant accédé à une page d'un site Internet;
   ➢ le mode d'analyse peut être choisi parmi (au moins) un premier mode, consistant à analyser des données de trafic générées obligatoirement par des équipements de communication de clients lorsqu'ils accèdent à une page de site Internet analysée, et un second mode, consistant à analyser des données de trafic signalant l'accès d'un client à un serveur offrant un accès à un site Internet comportant au moins une page analysée;
   ➢ les moyens de traitement peuvent être agencés pour ne procéder qu'à la détermination de pages associées à de nouvelles données de trafic;
- les moyens de traitement peuvent être agencés pour comparer à un seuil choisi chaque trafic relatif à une page, afin de décider soit le maintien de l'analyse de cette page lorsque son trafic est inférieur à ce seuil choisi, soit l'arrêt de l'analyse de cette page lorsque son trafic est supérieur ou égal à ce seuil choisi;
   ➢ sa première partie peut comprendre des deuxièmes moyens de stockage agencés pour stocker des données auxiliaires désignant des pages choisies pouvant être analysées et définissant des seuils devant être utilisés pour des pages choisies;
- sa première partie peut comprendre des troisièmes moyens de stockage agencés pour stocker les états spécifiant si des pages doivent ou ne doivent pas être analysées en correspondance d'identifiants de ces pages, un état pouvant être soit actif lorsque la page associée est en cours d'analyse, soit inactif lorsque la page associée n'est pas analysée;
- les moyens de génération peuvent être agencés pour déterminer des pages dont l'état d'analyse a changé dans un intervalle de temps prédéfini, et pour générer une commande regroupant les désignations de chaque page ainsi déterminée, de son état d'analyse et de son éventuel mode d'analyse;
- il peut comprendre au moins une seconde partie comportant des quatrièmes moyens de stockage propres à être associés à au moins un serveur de site(s) Internet et agencés pour stocker des contenus de commandes désignant des pages de site(s) de ce serveur;
- sa seconde partie peut comprendre des moyens d'association propres à être associés à au moins un serveur de site(s) Internet et agencés pour générer des ensembles de codes de pages, dits "codes de balisage de pages", signalant chacun si une page doit être analysée et son éventuel mode d'analyse, à partir des contenus de commande qui sont stockés dans les quatrièmes moyens de stockage et pour associer à ces pages les codes de balisage de pages correspondants générés.

L'invention propose également un programme informatique destiné à être utilisé par au moins un serveur, propre à être couplé à un réseau de communication, et constituant un dispositif de gestion du type de celui présenté ci-avant.

L'invention propose également un serveur équipé d'une première partie d'un dispositif de gestion du type de celui présenté ci-avant.

L'invention propose également un autre serveur équipé d'une seconde partie d'un dispositif de gestion du type de celui présenté ci-avant.

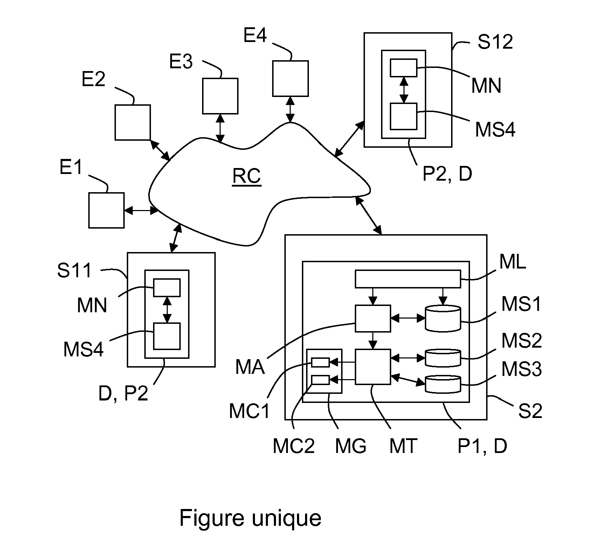

D'autres caractéristiques et avantages de l'invention apparaîtront à l'examen de la description détaillée ci-après, et du dessin annexé, sur lequel l'unique figure illustre de façon très schématique et fonctionnelle un réseau de communication auquel sont connectés des équipements de communication de clients, un serveur d'analyses équipé d'un exemple de réalisation d'une première partie d'un dispositif de gestion selon l'invention, et deux serveurs de site(s) Internet équipés chacun d'un exemple de réalisation d'une seconde partie d'un dispositif de gestion selon l'invention.

Le dessin annexé pourra non seulement servir à compléter l'invention, mais aussi contribuer à sa définition, le cas échéant.

L'invention a pour objet d'offrir un dispositif D destiné à permettre une gestion dynamique et donc en temps réel de pages de site(s) Internet dont on veut analyser l'audience et la fréquentation.

On a schématiquement illustré sur l'unique figure un réseau de communication RC auquel sont connectés des équipements de communication Ei (ici quatre, i = 1 à 4) d'utilisateurs, des serveurs S1j (ici deux, j = 1 ou 2) hébergeant chacun au moins un site Internet comportant au moins une page (de données), et un serveur d'analyse S2.

On notera que le réseau de communication RC peut représenter un simple réseau de communication offrant un accès à l'Internet (ou web) ou bien plusieurs réseaux de communication, éventuellement interconnectés, et offrant un accès à l'Internet (ou web).

On notera également que le nombre d'équipements de communication Ei connectés au réseau (de communication) RC peut être aussi grand qu'on le veut dès lors qu'il est au moins égal à un. De même, le nombre de serveurs de site(s) S1j connectés au réseau RC peut être aussi grand qu'on le veut dès lors qu'il est au moins égal à un.

Comme illustré sur l'unique figure, un dispositif de gestion D, selon l'invention, comprend au moins une première partie P1 qui est destinée à être associée à un serveur d'analyses S2. On entend ici par "associé" aussi bien le fait d'être implanté dans un serveur d'analyses S2 (comme illustré non limitativement), que le fait d'être connecté (ou accessible) à un serveur d'analyses S2.

Cette première partie P1 comprend au moins des moyens de traitement MT et des moyens de génération MG.

Les moyens de traitement MT sont agencés (ou conçus) de manière à déterminer en temps réel quelle(s) page(s) d'au moins un site Internet doi(ven)t être analysée(s) et quelle(s) page(s) d'au moins un site Internet ne doi(ven)t plus être analysée(s), en fonction au moins des trafics qui sont relatifs à ces pages.

Les trafics, qui sont utilisés par les moyens de traitement MT, sont par exemple déterminés par des moyens d'analyse MA qui font partie de la première partie P1 du dispositif (de gestion) D. Plus précisément, ces moyens d'analyse MA peuvent être agencés pour déterminer les trafics, qui sont en cours sur des pages identifiées, à partir de données de trafic. Mais, dans une variante, les trafics pourraient être directement déterminés par les moyens de traitement MT à partir de données de trafic reçues ou stockées en un endroit choisi.

Les données de trafic peuvent être, par exemple, des indicateurs tels que des identifiants de site Internet, des identifiants de page de site Internet, le nombre de clicks sur un lien, l'adresse URL d'une page qui a initialement généré une demande pour accéder à une page en cours, ou des données de clients ayant accédés (via leur équipement de communication Ei) à une page Internet. Par exemple, ces données de client peuvent être des adresses IP d'équipements de communication Ei de clients, des identifiants de navigateurs d'équipements de communication Ei de clients utilisés pour accéder à une page d'un site Internet, ou des identifiants d'applications tournant dans des équipements de communication Ei de clients et utilisées pour accéder à une page d'un site Internet.

Comme illustré non limitativement, les données de trafic peuvent être collectées par des moyens de collection ML qui font partie de la première partie P1 du dispositif (de gestion) D, puis stockées dans des premiers moyens de stockage MS1 qui font partie de la première partie P1. Mais, dans une variante elles pourraient parvenir directement aux moyens d'analyse MA, voire aux moyens de traitement MT.

On notera que les données de trafic peuvent être stockées dans les premiers moyens de stockage MS1 en correspondance d'une date et d'un horaire de réception. Mais, dans une variante, les moyens de collection ML peuvent simplement stocker les données de trafic dans les premiers moyens de stockage MS1, et signaler aux moyens d'analyse MA, en temps réel, celles qui viennent d'être reçues (et donc qui sont considérées comme nouvelles). Il est en effet avantageux que les moyens de traitement MT ne procèdent qu'à la détermination de pages qui sont associées à de nouvelles données de trafic représentatives du trafic qui est effectivement en cours. On comprendra en effet que si l'on ne dispose pas de nouvelles données de trafic relatives à une page, cela signifie que les performances de cette page n'ont pas changées depuis la dernière analyse, et donc qu'il n'est pas utile d'effectuer une nouvelle analyse avec les anciennes données de trafic de cette page puisque cela conduirait à des conclusions identiques à celles de sa dernière analyse.

Il est important de noter que les déterminations, effectuées par les moyens de traitement MT, reposent sur une partie au moins de l'historique des données de trafic des pages et non pas seulement sur les dernières données de trafic reçues.

Il est également important de noter que les données de trafic qui sont utilisées par le dispositif D dépendent du mode d'analyse qui est choisi pour l'analyse d'une page ou des pages. On peut en effet envisager aux moins les deux modes d'analyse décrits ci-dessous.

Un premier mode d'analyse consiste à analyser des données de trafic qui sont générées obligatoirement par les équipements de communication Ei des clients lorsqu'ils accèdent à une page de site Internet analysée et associée à un ensemble de codes, dit "code de balisage de page" ou "page tagging" en anglais, par exemple en Javascript, qui signale si elle doit ou ne doit pas être analysée et son éventuel mode d'analyse.

Un second mode d'analyse consiste à analyser des données de trafic qui signalent l'accès d'un équipement de communication Ei d'un client à un serveur S1 i offrant un accès à un site Internet comportant au moins une page analysée. On notera que dans ce cas les données de trafic (ou logs) sont généralement accessibles auprès du serveur S1j accédé.

Le dispositif D peut être agencé de manière à permettre la mise en oeuvre du seul premier mode d'analyse, ou bien du seul second mode d'analyse, ou encore à la fois du premier mode d'analyse et du second mode d'analyse, selon le mode de réalisation envisagé.

Pour déterminer quelle page doit être analysée, les moyens de traitement MT peuvent, par exemple, comparer à un seuil choisi le trafic qui est relatif à cette page. Dans ce cas, les moyens de traitement MT décident soit le maintien de l'analyse d'une page lorsque son trafic est inférieur au seuil choisi, soit l'arrêt de l'analyse d'une page lorsque son trafic est supérieur ou égal au seuil choisi.

On notera qu'il n'est pas obligatoire d'utiliser un même seuil pour toutes les pages. En effet, les moyens de traitement MT peuvent par exemple utiliser des données auxiliaires qui définissent différents seuils devant être utilisés respectivement pour des pages choisies (identifiées).

On notera également que certaines données auxiliaires peuvent également et éventuellement désigner des pages choisies pouvant être analysées (c'est-à-dire pour lesquelles les moyens de traitement MT doivent (prioritairement) déterminer si elles doivent ou ne doivent pas être analysées compte tenu de leur trafic en cours).

Ces données auxiliaires peuvent également et éventuellement désigner la granularité des actions pouvant être analysées. On entend ici par "granularité" un type d'action sur une page, comme par exemple le démarrage d'une vidéo ou un gros plan (ou zoom) sur une photo.

Par exemple, et comme illustré, les données auxiliaires peuvent être stockées dans des deuxièmes moyens de stockage MS2 qui font partie de la première partie P1 du dispositif D et qui sont accessibles aux moyens de traitement MT.

Les moyens de génération MG de la première partie P1 du dispositif D sont agencés (ou conçus) pour générer des commandes qui désignent au moins une page déterminée par les moyens de traitement MT et un état spécifiant si cette page doit ou ne doit pas être analysée, ainsi que le mode d'analyse de cette page lorsqu'il a été décidé de l'analyser.

Ces commandes sont générées en fonction de leur destinataire afin qu'il puisse comprendre leur contenu.

Si le dispositif D ne peut mettre en oeuvre que le seul premier mode d'analyse, ses moyens de génération MG ne comportent qu'un sous-module MC1 dédié spécifiquement à la génération de commandes dédiées au premier mode d'analyse. En revanche, si le dispositif D ne peut mettre en oeuvre que le seul second mode d'analyse, ses moyens de génération MG ne comportent qu'un sous-module MC2 dédié spécifiquement à la génération de commandes dédiées au second mode d'analyse. Enfin, comme illustré non limitativement, si le dispositif D peut mettre en oeuvre les premier et second modes d'analyse, ses moyens de génération MG peuvent comporter, d'une part, un sous-module MC1 dédié spécifiquement à la génération de commandes dédiées au premier mode d'analyse, et un sous-module MC2 dédié spécifiquement à la génération de commandes dédiées au second mode d'analyse.

On comprendra que les commandes sont générées par les moyens de génération MG en fonction d'instructions (ou ordres) fournies par les moyens de traitement MT et représentatives des pages qui doivent être analysées (et de leur mode d'analyse si un choix est possible) et des pages qui ne doivent plus être analysées.

On notera, comme illustré non limitativement, que les moyens de génération MG peuvent par exemple stocker dans des troisièmes moyens de stockage MS3 (faisant partie de la première partie P1 du dispositif D) les états, qui spécifient si des pages doivent ou ne doivent pas être analysées, en correspondance d'identifiants de ces pages. Cela est destiné à permettre à chaque instant de connaître la liste des pages qui sont en cours d'analyse et la liste des pages qui ne sont plus en cours d'analyse.

Par exemple, un état peut être soit actif lorsque la page qui lui est associée est en cours d'analyse, soit inactif lorsque la page qui lui est associée n'est plus analysée.

On notera également qu'il est avantageux que les moyens de génération MG soient agencés pour déterminer des pages dont l'état d'analyse a changé dans un intervalle de temps prédéfini, afin de générer une commande regroupant les désignations de ces pages déterminées, de leurs états d'analyse respectifs et de leurs éventuels modes d'analyse (en cas de choix). Cela permet en effet de réduire la bande passante utilisée pour communiquer les commandes à leur(s) destinataire(s).

On notera également que l'on peut envisager de recommencer automatiquement l'analyse d'une page d'un site Internet, dont les moyens de traitement MT ont décidé l'arrêt temporaire, une fois qu'un délai choisi s'est écoulé (sans changement d'état) et/ou en fonction du trafic relatif à au moins une autre page du même site Internet.

Le destinataire d'une commande est préférentiellement un serveur S1j de site(s) Internet. C'est en effet un tel serveur S1j qui est chargé d'associer un code de balisage de page à une page d'un site Internet qu'il héberge et/ou de fournir sur requête ou automatiquement (par programmation) à la première partie P1 du dispositif D les données de trafic de type "log" qui sont relatives à des pages de site(s) Internet qu'il héberge.

Afin de traiter les commandes qui sont générées par la première partie P1 du dispositif D, ce dernier (D) peut comporter au moins une seconde partie P2 qui est destinée à être associée (c'est-à-dire implantée dans ou connectée) à au moins un serveur S1j.

Comme illustré non limitativement, une telle seconde partie P2 peut par exemple comporter des quatrièmes moyens de stockage MS4 agencés pour stocker les contenus des commandes reçues (qui désignent des pages de site(s) du serveur S1j auquel ils sont associés). On notera que ces quatrièmes moyens de stockage MS4 peuvent être éventuellement subdivisés en deux parties dédiées respectivement aux commandes relatives au premier mode d'analyse (page tagging) et au second mode d'analyse (log).

Cette seconde partie P2 peut également, comme illustré non limitativement, comporter des moyens d'association MN qui sont chargés de générer des ensembles de codes de pages à partir des contenus de commande qui sont stockés dans les quatrièmes moyens de stockage MS4, et pour associer à ces pages les codes de balisage de pages qu'ils ont générées pour elles. Il est rappelé que l'on entend ici par "ensemble de codes" un code de balisage de page signalant si une page doit être analysée et son éventuel mode d'analyse. Ces codes de balisage de pages ne sont utilisés que lorsque le dispositif D effectue des analyses selon le premier mode présenté plus haut. On notera que lorsqu'une page ne doit pas être analysée, on ne lui associe pas de code de balisage de page.

Lorsqu'un équipement de communication Ei accède à une page associée à un code de balisage de page, il analyse son contenu et si ce dernier signale que la page est en cours d'analyse, il génère des données de trafic qu'il transmet à destination de la première partie P1 du dispositif D.

Lorsque le dispositif D effectue des analyses selon le second mode présenté plus haut, chaque serveur S1j analyse les contenus de commande qui sont stockés dans les quatrièmes moyens de stockage MS4 associés afin de déterminer les pages en cours d'analyse pour lesquelles il est autorisé à fournir les données de trafic de type "log" associées, sur requête ou automatiquement (par programmation), à la première partie P1 du dispositif D.

On notera que le dispositif de gestion D selon l'invention, et notamment ses moyens de traitement MT et ses moyens de génération MG, ainsi que ses éventuels moyens de collection ML, moyens d'analyse MA, moyens d'association MN, et moyens de stockage MS1-MS4 peuvent être réalisés sous la forme de circuits électroniques, de modules logiciels (ou informatiques), ou d'une combinaison de circuits et de logiciels.

Grâce à la gestion dynamique offerte par l'invention, seules les pages qui présentent un trafic particulier (par exemple inférieur à un seuil choisi) font l'objet d'une analyse puisqu'elles sont a priori sujettes à une baisse de fréquentation dont la cause doit être identifiée. Cela permet de réduire très notablement non seulement la bande passante utilisée pour transmettre les données de trafic, mais également les capacités de calcul nécessaires à l'analyse des données de trafic. En outre, cela permet de détecter rapidement les problèmes relatifs à une page.

L'invention ne se limite pas aux modes de réalisation de dispositif de gestion et de serveurs décrits ci-avant, seulement à titre d'exemple, mais elle englobe toutes les variantes que pourra envisager l'homme de l'art dans le cadre des revendications ci-après.

## Revendications

1. Dispositif (D) de gestion d'analyses de données d'audience et de fréquentation de site(s) Internet proposant des pages de données, **caractérisé en ce qu'**il comprend une première partie (P1) comportant i) des moyens de traitement (MT) agencés pour déterminer en temps réel quelle(s) page(s) d'au moins un site Internet doi(ven)t être analysée(s) et quelle(s) page(s) d'au moins un site Internet ne doi(ven)t plus être analysée(s), en fonction au moins des trafics relatifs auxdites pages, et ii) des moyens de génération (MG) agencés pour générer des commandes désignant au moins une page déterminée et un état spécifiant si cette page doit ou ne doit pas être analysée et un éventuel mode d'analyse de cette page.

2. Dispositif selon la revendication 1, **caractérisé en ce que** ladite première partie (P1) comprend des moyens d'analyse (MA) agencés pour déterminer lesdits trafics en cours sur des pages à partir de données de trafic.

3. Dispositif selon la revendication 2, **caractérisé en ce que** ladite première partie (P1) comprend des premiers moyens de stockage (MS1) agencés pour stocker lesdites données de trafic.

4. Dispositif selon l'une des revendications 2 et 3, **caractérisé en ce que** lesdites données de trafic sont des indicateurs choisis dans un groupe comprenant au moins des identifiants de site Internet, des identifiants de page de site Internet, un nombre de clicks sur un lien, une adresse URL d'une page qui a initialement généré une demande pour accéder à une page en cours, et des données de client ayant accédé à une page Internet.

5. Dispositif selon la revendication 4, **caractérisé en ce que** lesdites données de client sont choisies dans un groupe comprenant au moins des adresses IP d'équipement de communication de client, des identifiants de navigateur de client et des identifiants d'application de client ayant accédé à une page d'un site Internet.

6. Dispositif selon l'une des revendications 2 à 5, **caractérisé en ce que** ledit mode d'analyse est choisi dans un groupe comprenant au moins un premier mode, consistant à analyser des données de trafic générées obligatoirement par des équipements de communication (Ei) de clients lorsqu'ils accèdent à une page de site Internet analysée, et un second mode, consistant à analyser des données de trafic signalant l'accès d'un client à un serveur (S1j) offrant un accès à un site Internet comportant au moins une page analysée.

7. Dispositif selon l'une des revendications 2 à 6, **caractérisé en ce que** lesdits moyens de traitement (MT) sont agencés pour ne procéder qu'à la détermination de pages associées à de nouvelles données de trafic.

8. Dispositif selon l'une des revendications 1 à 7, **caractérisé en ce que** lesdits moyens de traitement (MT) sont agencés pour comparer à un seuil choisi chaque trafic relatif à une page, afin de décider soit le maintien de l'analyse de cette page lorsque son trafic est inférieur audit seuil choisi, soit l'arrêt de l'analyse de cette page lorsque son trafic est supérieur ou égal audit seuil choisi.

9. Dispositif selon la revendication 8, **caractérisé en ce que** ladite première partie (P1) comprend des deuxièmes moyens de stockage (MS2) agencés pour stocker des données auxiliaires désignant des pages choisies pouvant être analysées et définissant des seuils devant être utilisés pour des pages choisies.

10. Dispositif selon l'une des revendications 1 à 9, **caractérisé en ce que** ladite première partie (P1) comprend des troisièmes moyens de stockage (MS3) agencés pour stocker lesdits états spécifiant si des pages doivent ou ne doivent pas être analysées en correspondance d'identifiants de ces pages, un état pouvant être soit actif lorsque ladite page associée est en cours d'analyse, soit inactif lorsque ladite page associée n'est pas analysée.

11. Dispositif selon l'une des revendications 1 à 10, **caractérisé en ce que** lesdits moyens de génération (MG) sont agencés pour déterminer des pages dont l'état d'analyse a changé dans un intervalle de temps prédéfini, et pour générer une commande regroupant les désignations de chaque page ainsi déterminée, de son état d'analyse et de son éventuel mode d'analyse.

12. Dispositif selon l'une des revendications 1 à 11, **caractérisé en ce qu'**il comprend au moins une seconde partie (P2) comportant des quatrièmes moyens de stockage (MS4) propres à être associés à au moins un serveur (S1j) de site(s) Internet et agencés pour stocker des contenus de commandes désignant des pages de site(s) dudit serveur (S1j).

13. Dispositif selon la revendication 12, **caractérisé en ce que** ladite seconde partie (P2) comprend des moyens d'association (MN) propres à être associés audit serveur (S1j) de site(s) Internet et agencés pour générer des ensembles de codes de pages, dits "codes de balisage de pages", signalant chacun si une page doit être analysée et son éventuel mode d'analyse, à partir desdits contenus de commande stockés dans lesdits quatrièmes moyens de stockage (MS4) et pour associer à ces pages lesdits codes de balisage de pages correspondants générés.

14. Programme informatique destiné à être utilisé par au moins un serveur (S2, S1j) propre à être couplé à un réseau de communication (RC), **caractérisé en ce qu'**il constitue un dispositif de gestion (D) selon l'une des revendications précédentes.

15. Serveur (S2) propre à être connecté à un réseau de communication (RC), **caractérisé en ce qu'**il comprend une première partie (P1) d'un dispositif de gestion (D) selon l'une des revendications 1 à 13.

16. Serveur (S1j) propre à être connecté à un réseau de communication (RC), **caractérisé en ce qu'**il comprend une seconde partie (P2) d'un dispositif de gestion (D) selon l'une des revendications 1 à 13.
